# EUROPEAN PATENT APPLICATION

(11) **EP 3 086 271 A1**
(43) Date of publication of application: **26.10.2016**
(21) Application number: 16165800.0
(22) Date of filing: 18.04.2016
(51) Int. Cl.: G06Q 20/30, G06F 15/18, G06Q 20/38, G06K 9/00, G06Q 20/42, G06K 9/62, G06Q 20/10

(54) **METHOD AND COMPUTER SYSTEM FOR AUTOMATIC HANDLING AND PAYMENT OF INVOICES**

(30) Priority: 22.04.2015 DK 201570235
(71) Applicant: AdmiFlow ApS, 7400 Herning (DK)
(72) Inventor: Christensen, Ejvind, 7400 Herning (DK); Christensen, Allan Berthelsen, 7430 Ikast (DK)
(74) Representative: Carlsen, Bjarne

(57) **Abstract**

A method and a computer system are disclosed for automated handling and payment of invoices regardless of the bookkeeping status of these invoices, said method comprising the automated steps of:
- performing an electronic scanning of received incoming invoices (II)
- extracting data (DE) from each invoice, which data is relevant for the payment of that specific invoice
- checking that the extracted data is consistent with data previously stored in a database
- creating a payment file (PF) containing the necessary data related to the invoices for the bank (B) to be able to pay the invoices in time
- sending (EXP) the payment file to the bank for payment of the invoices
- repeating the above steps periodically.

## Description

The present invention relates to a method and a computer system for automatic handling and payment of invoices regardless of the bookkeeping status of the invoices.

### Background of the invention

Systems for scanning and interpretation of documents, such as invoices, using OCR (Optical Character Recognition) are known in the art. Such systems allow for an, at least partly, automation of the rather cumbersome procedure of recording incoming invoices to be paid, checking the validity of such invoices and forwarding the necessary information to the bank for actually paying the invoices in the right way and at the right time.

Still, however, a certain amount of manual work is required in order to process the bookkeeping and payment of the scanned invoices. In order for automatic payment to be possible, the invoices must be properly recorded in the bookkeeping system before it is able to initiate such automatic payment. This puts a certain demand on the staff to keep the bookkeeping up to date at all times.

### Brief description of the invention

It is an object of the present invention to provide an invoice handling method and a computer system, which at least partly overcome the above-mentioned disadvantages of systems known in the art.

The present invention relates to a method for automated handling and payment of invoices regardless of the bookkeeping status of these invoices, said method comprising the automated steps of:
- performing an electronic scanning of received incoming invoices
- extracting data from each invoice, which data is relevant for the payment of that specific invoice
- checking that the extracted data is consistent with data previously stored in a database
- creating a payment file containing the necessary data related to the invoices for the bank to be able to pay the invoices in time
- sending the payment file to the bank for payment of the invoices
- repeating the above steps periodically.

An important advantage of this method is that, contrary to known methods in the art, the payment procedure is performed independently from the bookkeeping procedure. In known methods, automated payments can only be performed after registration of the invoices in the bookkeeping system, the alternative being manual handling of the payments. With the present invention, although the automated payment procedure must be repeated with relatively short time intervals in order to make sure that time limits for payments are not exceeded, the bookkeeping can be performed with significantly longer time intervals, such as for instance every month or every three months.

In an embodiment of the invention, the electronic scanning includes an Optical Character Recognition (OCR) scanning.

OCR scanning is by far the most commonly used form of electronic scanning when data is to be automatically extracted from a paper document.

In an embodiment of the invention, the method further comprises, before the step of receiving the incoming invoices, a step of establishing a dedicated electronic mailbox for receiving, in one of a number of predefined electronic formats, incoming invoices to be handled and paid.

Receiving the incoming invoices in a dedicated electronic mailbox simplifies the procedure because all invoices to be electronically scanned are found in one place.

In an embodiment of the invention, the predefined electronic formats comprises one or more of the following:
- pdf document attached to an electronic mail
- Word or Excel document attached to an electronic mail
- Payment directory in a predefined format, for instance from a bank

These are all well-known and commonly used formats.

In an embodiment of the invention, after the step of extracting data from a given invoice, the invoice is stored in a database, which can be either the same database as the one containing the data, against which the extracted data are compared for consistency, or another database.

Storing the invoices in a database, which is a legal requirement in several countries for documentation purposes, makes sure that the invoice is available, for instance, for manual approval of the payment and for bookkeeping, which may be handled at a later point of time.

In an embodiment of the invention, after the step of extracting data from a given invoice, bookkeeping data are sent to a bookkeeping system for being recorded independently from the processing of the payment of the invoice.

Using at least some of the extracted data for bookkeeping purposes as well enables an at least partly automated bookkeeping procedure to be performed in parallel with but independent from the payment procedure performed by the method of the present invention.

In an embodiment of the invention, the data extracted from each invoice includes as much as possible of the following information, insofar as it is present within the invoice:
- VAT Number of the supplier
- invoice number
- net amount
- gross amount
- VAT amount
- any discounts
- date of invoice
- payment date
- order number
- project number
- bank account number
- payment identification code
- currency code
- bookkeeping text (for instance the name of the supplier)

This data contains the relevant information for performing the payment procedure and is also relevant for bookkeeping purposes.

In an embodiment of the invention, the data checked for consistency with the data previously stored within the database includes:
- debtor identity (name, address, client account number, VAT number, etc.)
- creditor identity (name, creditor number, etc.)
- banking information (bank, account number, etc.)
- payment conditions

The consistency check of this information significantly reduces the risk of errors in the payment files, which is sent to the bank.

In the present document, the expression "debtor" is meant to refer to a person or a company, to whom the invoices belong in the sense that this person or this company has the obligation to pay the invoice. The debtor may own or buy access to a system handling and paying the debtor's own invoice in accordance with the described method, or the debtor may be a client of an administrator of such a system, which administrator uses the system for handling and paying invoices for a plurality of different debtors.

In an embodiment of the invention, the method further comprises, before the step of creating a payment file, a step of manually checking and correcting the data extracted from the invoices, from which the necessary data has not been extracted and/or for which the extracted data is not consistent with the data previously stored within the database.

This step enables further processing of invoices, from which, for one reason or another, the necessary data cannot be extracted automatically.

In an embodiment of the invention, the manual correction of the extracted data also includes a training process, in which a system performing the method is shown where in the given invoice to find data, which was not extracted automatically at first, so that the probability of finding and extracting the data automatically when a similar invoice appears is increased.

The use of such a training process reduces the need for manual checking and correction of data from similar invoices being handled at a later point of time.

In an embodiment of the invention, the data stored in the database includes other documents relating to the same debtor, such as credit notes, sales invoices, cash purchase vouchers (scanned or photographed) as well as other business related documents, contracts and certificates.

For simplicity, it is advantageous to store the purchase invoices along with other business documents related to the same debtor.

In an embodiment of the invention, the method further comprises, before the step of creating a payment file, the steps of:
- deciding, based on predefined criteria, for each invoice whether it relates to an automatically approved payment or to a manually approved payment
- requesting one or more persons, who are appointed to perform this task, to manually approve the payment of the invoices decided to relate to manually approved payments.

Distinguishing between automatically approved payments and manually approved payments reduces the need for manual approval of invoices and thereby the workload related thereto.

In an embodiment of the invention, the predefined criteria include amount limits, which can differ between different debtors and between invoices from different suppliers to the same debtor.

This enables monitoring of significant changes in the amounts on certain periodic invoices, such as phone bills, etc.

In an embodiment of the invention, in the step of creating a payment file, only the data relating to invoices, which are either decided to relate to automatically approved payments or manually approved, is included in the payment file.

Removing the non-approved payments from the payment file ensures that only those invoices are paid by the bank, which are supposed to be paid. The non-approved payments are stored within the system, however, for later approval and payment.

In an embodiment of the invention, the steps are repeated at least every ten days, preferably once a week.

Relatively short time intervals are needed in order to ensure that no time limits for payment are exceeded. The time intervals between the repetitions of the automated payment procedure can be adjusted according to the needs and desires of the debtor.

In an embodiment of the invention, invoices relating to a plurality of different debtors having different client accounts are handled and paid.

Handling and paying invoices from a plurality of different debtors enables for a centralised handling, controlled and run by an administrator such as, for instance, an accountancy firm or the like.

In an embodiment of the invention, the invoices relating to different debtors are separated from each other before the step of performing an electronic scanning by establishing a dedicated electronic mailbox for each of the debtors, whose invoices are to be handled and paid

Receiving the incoming invoices in dedicated electronic mailboxes related to the respective debtors simplifies the procedure because all invoices to be OCR scanned, which relate to a given debtor, are found in one place.

In an embodiment of the invention, the invoices relating to different debtors are separated from each other after the step of extracting data based on debtor information extracted from each invoice.

Separating the invoices relating to different debtors based on debtor information extracted from each invoice eliminates the need for a plurality of dedicated electronic mailboxes.

In an embodiment of the invention, before the creation of the payment file, a control is made, for instance on the combination of supplier and invoice number, in order to ensure that the same invoice is not handled and paid twice.

In an aspect of the invention, it relates to a computer system for automated handling and payment of invoices regardless of the bookkeeping status of these invoices, which computer system comprises means for electronic communication, equipment for scanning documents and a database and is arranged to perform the above-described method.

In an aspect of the invention, it relates to software running on a computer system, enabling the computer system to perform the above-described method.

### The drawing

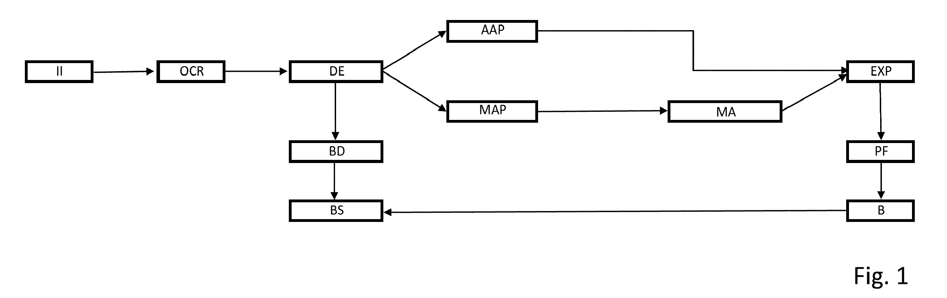

In the following, a few embodiments of the invention are described in more detail with reference to the drawing, wherein
Fig. 1 illustrates schematically the information flow through a system performing a method according to an embodiment of the invention.

### Detailed description of the invention

The system illustrated schematically in Fig. 1 is operated by an administrator, for instance an accountancy firm or a bookkeeping firm, having client accounts for each of the debtors, whose invoices are handled and paid by the system.

The incoming invoices II are sent to dedicated electronic mailboxes, each of which are assigned to a specific debtor and client account. The invoices II are sent in one of the following electronic formats:
- pdf document attached to an electronic mail
- Word or Excel document attached to an electronic mail
- Payment directory in a predefined format, for instance from a bank

The debtor can request the creditors to send invoices II directly to the dedicated electronic mailbox by e-mail rather than sending them to the debtor, or the debtor can forward invoices II received by e-mail to the dedicated electronic mailbox. If the debtor receives invoices II by ordinary mail, these invoices II can be scanned and sent to the dedicated electronic mailbox by e-mail.

If the debtor wishes to use an existing electronic mailbox for this purpose, the debtor must be made aware that only relevant invoices II may be sent to this electronic mailbox and that only the invoice handling and payment system is allowed to empty this electronic mailbox.

The invoices II sent to a dedicated electronic mailbox are Optical Character Recognition (OCR) scanned, and at least the following data is extracted DE from each invoice:
- VAT Number of the supplier/creditor
- invoice number
- net amount
- gross amount
- VAT amount
- any discounts
- date of invoice
- payment date
- order number
- project number
- bank account number
- payment identification code
- currency code
- bookkeeping text (for instance the name of the supplier/creditor)

This data is extracted DE and stored within the OCR scanner to be used for facilitating later identification of data in similar incoming invoices II.

If the OCR scanning and data extraction system has been trained as described below, it has been shown that the necessary data can be successfully extracted DE from 80-90 % of the invoices.

After the data extraction DE, the relevant bookkeeping data BD extracted from a given invoice is collected in a file, typically written in Extensible Markup Language (XML), and sent to the administrator's bookkeeping system BS for being recorded independently from the processing of the payment of the invoice.

In order to improve the quality of the registrations, the extracted data is compared to creditor data already stored within the database and/or the bookkeeping system BS. If there is any inconsistency, for instance with regard to the payment conditions, between the extracted data and the data already stored within the system, a request for manual intervention is sent to one or more persons appointed to take care of this task.

The creditor data in the database and/or bookkeeping system are brought up to date on a daily basis.

The creditor data compared for consistency includes the following:
- creditor name
- creditor country
- creditor postal code
- creditor city
- bank country
- bank code
- bank account number
- VAT number
- client account number
- IBAN
- creditor phone number
- creditor number
- creditor address
- type of payment

The purchase invoices, for which the data extraction DE is 100 % successful, are forwarded for approval AAP, MAP of the payment. The remaining invoices are manually trained and/or missing data are typed into the system in order to enable the further processing towards payment of the invoice. The training consists in indicating to the system where a specific piece of data, such as for instance the VAT number, is to be found on the invoice, so that when a similar invoice is handled at a later point of time, the system is able to recognise it automatically and no manual intervention is needed.

If the invoice is not readable, for instance because the text is blurred, because the paper of the original invoice has been creased or because there is handwriting across some of the typed text, missing data may be typed manually into the system in order to enable the further processing of the invoice.

The invoices are stored in the database along with other relevant business documents relating to the same debtor, such as for instance credit notes, sales invoices, cash purchase vouchers (scanned or photographed) as well as other business related documents, contracts and certificates.

In general, these other business documents do not enter the database through the dedicated electronic mailbox and the OCR scanner. Rather, they are uploaded directly to the database by the debtor or by the administrator. One exception from this, however, are the credit notes, which are OCR scanned from the dedicated electronic mailbox just like the invoices II. The data extracted from the credit notes are not used directly in the creation of the payment file PF but stored within the invoice handling and payment system for keeping track of the debtor's receivables with each supplier. In this way, data extracted from credit notes can be used for adjustment of amounts to be paid to such suppliers at a later point of time.

The database is equipped with an OCR scanning system enabling full text searches to be performed in all documents stored within the database.

Invoices from public authorities and/or from creditors previously approved for automatically approved payment AAP are automatically approved for payment, and possibly also automatically recorded in the bookkeeping system BS, by the system.

The remaining invoices are categorised as manually approved payments MAP must be manually approved MA by two approvers before they are ready to be paid. Scanned copies of these invoices are sent to the approvers, for instance by e-mail. The first approver is an employee of the administrator of the system, whereas the second approver can be an employee of the administrator, too, or it can be an employee of the debtor, to whom the invoice is related.

In different embodiments of the system, the number of approvers may vary, for instance between 1 and 5, depending on different details relating to the individual invoice, such as the supplier and/or the amount to be paid. It should be noted that this approval system used before the creation of the payment file PF is independent from approval systems used in the banks before actually executing the payments.

During the manual approval MA, different notes can be added to the invoice, such as project numbers, names of persons participating in events, etc.

Once a week, the administrator will inform each debtor if there are any manually approved payments MAP, which have not yet been manually approved MA. If a manually approved payment MAP is still not approved, the administrator will inform the debtor that the payment is refused. If the invoice must be paid anyway, the debtor can pay it, or the debtor can ask the administrator to pay it manually.

For each debtor, a payment file PF containing payment information for each invoice, which is either automatically or manually approved MA, is created once a week and exported EXP to the bank B of the respective debtor. This payment file PF contains the necessary data for the bank B to pay the invoices correctly and in time, namely:
- customer number
- supplier creditor number
- supplier postal code
- supplier city
- supplier address
- type of payment
- supplier bank registration number
- supplier bank account number
- supplier payment identification code

The payment file PF is created in Extensible Markup Language (XML) in a format, which is readable by the banking system of all banks B within a certain geographical area, such as for instance throughout a country. Other embodiments of the system may create the payment file PF in other appropriate digital formats, which can be read be the relevant banking systems.

Finally, the figure indicates how information contained in account statements are sent from the bank B and recorded within the bookkeeping system BS along with the bookkeeping data BD extracted from the invoices. The information from the bank B may include data facilitating automated bookkeeping of the invoices, which data is added to the payment file PF during the automated or manual approval MA of the payments before sending the payment file PF to the bank B.

### List of figure references

- AAP.: Automatically approved payment
- B.: Bank
- BD.: Bookkeeping data
- BS.: Bookkeeping system
- DE.: Data extraction
- EXP.: Export of payment file
- II.: Incoming invoices
- MA.: Manual approval
- MAP.: Manually approved payment
- OCR.: Optical Character Recognition scanning
- PF.: Payment file

## Claims

1. A method for automated handling and payment of invoices regardless of the bookkeeping status of these invoices, said method comprising the automated steps of:
- performing an electronic scanning of received incoming invoices (II)
- extracting data (DE) from each invoice, which data is relevant for the payment of that specific invoice
- checking that the extracted data is consistent with data previously stored in a database
- creating a payment file (PF) containing the necessary data related to the invoices for the bank (B) to be able to pay the invoices in time
- sending (EXP) the payment file to the bank for payment of the invoices
- repeating the above steps periodically.

2. The method according to claim 1, wherein the electronic scanning includes an Optical Character Recognition (OCR) scanning.

3. The method according to claim 1 or 2 further comprising, before the step of receiving the incoming invoices, a step of:
- establishing a dedicated electronic mailbox for receiving, in one of a number of predefined electronic formats, incoming invoices to be handled and paid.

4. The method according to any of the preceding claims, wherein, after the step of extracting data from a given invoice, the invoice is stored in a database, which can be either the same database as the one containing the data, against which the extracted data are compared for consistency, or another database.

5. The method according to any of the preceding claims, wherein, after the step of extracting data from a given invoice, bookkeeping data (BD) are sent to a bookkeeping system (BS) for being recorded independently from the processing of the payment of the invoice.

6. The method according to any of the preceding claims further comprising, before the step of creating a payment file, a step of:
- manually checking and correcting the data extracted from the invoices, from which the necessary data has not been extracted and/or for which the extracted data is not consistent with the data previously stored within the database.

7. The method according to claim 6, wherein the manual correction of the extracted data also includes a training process, in which a system performing the method is shown where in the given invoice to find data, which was not extracted automatically at first, so that the probability of finding and extracting the data automatically when a similar invoice appears is increased.

8. The method according to any of the preceding claims further comprising, before the step of creating a payment file, the steps of:
- deciding, based on predefined criteria, for each invoice whether it relates to an automatically approved payment (AAP) or to a manually approved payment (MAP)
- requesting one or more persons, who are appointed to perform this task, to manually approve (MA) the payment of the invoices decided to relate to manually approved payments.

9. The method according to claim 8, wherein, in the step of creating a payment file, only the data relating to invoices, which are either decided to relate to automatically approved payments or manually approved, is included in the payment file.

10. The method according to any of the preceding claims, wherein the steps are repeated at least every ten days, preferably once a week.

11. The method according to any of the preceding claims, wherein invoices relating to a plurality of different debtors having different client accounts are handled and paid.

12. The method according to claim 11, wherein the invoices relating to different debtors are separated from each other before the step of performing an electronic scanning by establishing a dedicated electronic mailbox for each of the debtors, whose invoices are to be handled and paid

13. The method according to claim 11, wherein the invoices relating to different debtors are separated from each other after the step of extracting data based on debtor information extracted from each invoice.

14. A computer system for automated handling and payment of invoices regardless of the bookkeeping status of these invoices, which computer system comprises means for electronic communication, equipment for scanning documents and a database and is arranged to perform the method according to any of the preceding claims.

15. Software running on a computer system, enabling the computer system to perform the method according to any of claims 1-13.
